# EUROPEAN PATENT APPLICATION

(11) **EP 2 679 121 A1**
(43) Date of publication of application: **01.01.2014**
(21) Application number: 13173499.8
(22) Date of filing: 25.06.2013
(51) Int. Cl.: A47J 37/06, A47J 37/07

(54) **Improved cooking assembly**

(30) Priority: 25.06.2012 AU 2012902677
(71) Applicant: Garth Australia Pty Ltd, 3000 Melbourne Victoria (AU)
(72) Inventor: Hill, Gavin, Melbourne, Victoria, 3000 (AU)
(74) Representative: Jansen, Cornelis Marinus

(57) **Abstract**

Some embodiments relate to a cooking assembly. The cooking assembly comprises: one or more grill plates (11a,11b) positioned over a heat source; mounting means for said one or more grill plates, including forward and rear mounts (36) either side of said heat source; and a liquid collection tray positioned to collect liquids generated during the cooking process on said grill plates and to direct said liquids away from said grill plates and said heat source to a collection reservoir (3) for disposal thereof.

## Description

### Related Applications

This application claims priority from Australian Provisional Patent Application No. 2012902677, the entire contents of which is hereby incorporated by reference.

### Technical field

Described embodiments relate generally to apparatus and assemblies for cooking and in particular to cooking assemblies that are suited for use in outdoor cookers.

### Background

The use of grilling as a cooking means, particularly with the highly popular use of this method in barbeque cooking apparatus provides for a potentially highly efficient, safe and healthy cooking methodology whereby the operator can readily cook food in a manner to remove a substantial portion of unwanted fats and oils and other cooking liquids associated with the food being cooked which traditionally fall through the grill plate onto the heat source positioned underneath the grill plate causing the fats and liquids, etc., to be combusted and/or otherwise disposed of during the cooking process.

The traditional method of such cooking however results in contamination of the heat source and the production of combustion by-products which can be generated and directed back onto the underneath of the food being cooked and thereby causing potential contamination and a reduction in the efficiency and intended reduction of unnecessary fats, oils and other associated cooking liquids during the cooking process.

To date a range of fat and liquid reducing means have been available in the market place, however a fully efficient, clean, economical and readily maintained result is yet to be provided to address the above-identified problems.

It is desired to address or ameliorate one or more shortcomings or disadvantages associated with prior cooking assemblies, or to at least provide a useful alternative thereto.

### Summary

Some embodiments relate to a cooking assembly comprising one or a plurality of grill plates positioned over a heat source, mounting means for said grill plate including forward and rear mounts either side of said heat source wherein said forward mount includes a liquid collection tray positioned to collect liquids generated during the cooking process on said grill plates and direct said liquids away from said grill plates and said heat source to a collection reservoir for disposal thereof.

The collection tray may include a floor, a forward lip and a rearward channel. The floor is preferably inclined toward said rearward channel and may include a plurality of raised grill plate supports. The rearward channel is preferably inclined to direct liquids away from said grill plate and away from said heat source to a collection reservoir.

The grill plate preferably includes a plurality of channels running rear to forward and many include a rear elevated foot and a front lower foot so as to incline the angle of said channels when positioned on said forward and rear mounts of said assembly.

The assembly is preferably an outdoor grilling cooker and may take the form of a barbeque.

Some embodiments relate to a fluid collection tray for a cooking assembly, the collection tray comprising:
an elongate body to be accommodated, in use, at least partially within a cooking apparatus, wherein the elongate body defines an inclined tray floor and an inclined collecting channel that extends along one edge of the elongate body;
wherein the inclination of the tray floor has a different direction than the inclination of the collecting channel;
wherein the inclined collecting channel is arranged to receive fluids flowing down the inclined tray floor and direct the fluids to a projecting portion of the collecting channel at one end of the elongate body; and
wherein the elongate body has a wall joining the tray floor and the collecting channel.

Throughout this specification, the word "comprise", or variations such as "comprises" or "comprising", will be understood to imply the inclusion of a stated element, integer or step, or group of elements, integers or steps, but not the exclusion of any other element, integer or step, or group of elements, integers or steps.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Brief Description of the Drawings

Embodiments are described in further detail below by way of example, with reference to the accompanying drawings, in which:
Figure 1 shows an exploded view of key components of an improved cooking assembly;
Figure 2A shows a rear view of a collection tray of the cooking assembly;
Figure 2B shows one end view of the collection tray;
Figure 2C shows an opposite end view of the collection tray;
Figure 3 shows a plan view of the collection tray;
Figure 4 shows a perspective view of the collection tray;
Figures 5A to 5F show all elevations of a sample grill plate;
Figure 6 shows a perspective view of the grill plate mounted via the collection tray in cross-section;
Figure 7 shows a front perspective view of the grill plate mounted via the collection tray;
Figure 8 is a perspective view of a part of the cooking assembly, with a grill plate removed;
Figure 9 is a perspective view of a part of a cooking apparatus, with a grill plate and hotplate obscuring the collection tray; and
Figure 10 is a perspective view of an underside of a part of the cooking apparatus, showing a position of a collection reservoir to receive fluids from the collection tray.

### Detailed Description

Described embodiments generally relate to cooking assemblies and in particular to a configuration of cooking assembly components particularly adapted for use with outdoor grilling cooking, including barbeques and the like. The configuration and components are particularly adapted to receive, collect and discharge the fats, oils and other discharges associated with the cooking process and to cleanly and efficiently direct such liquids away from the cooking zone to a convenient collection point for ready disposal.

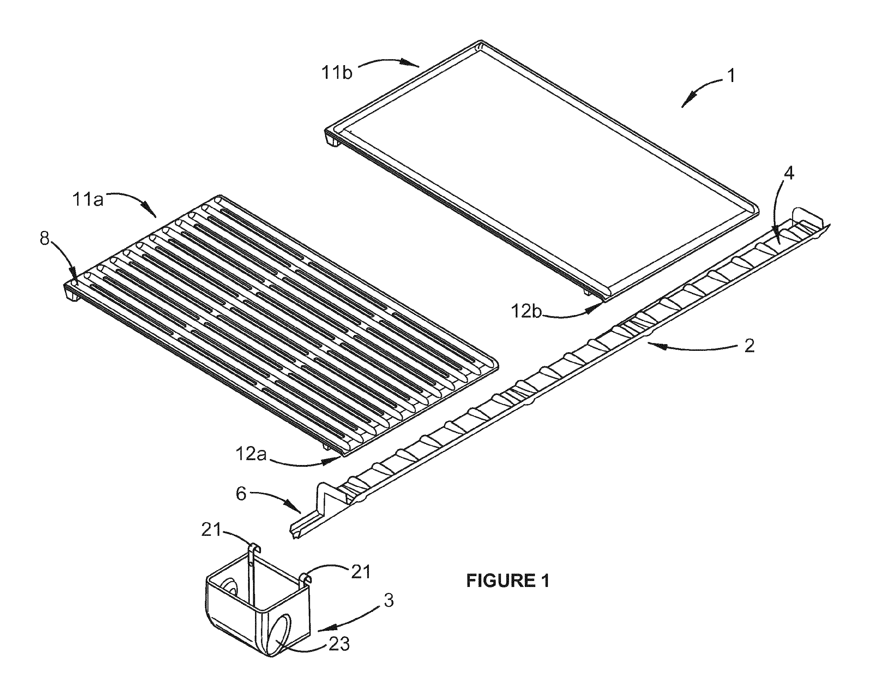

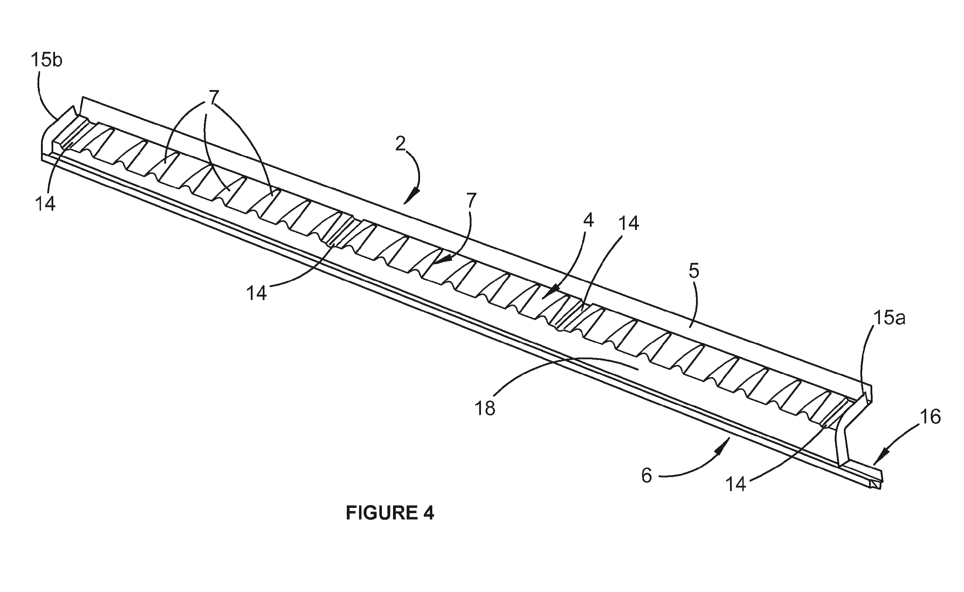

Embodiments are described herein with reference to an example configuration as shown in the associated Figures 1 to 10. The cooking assembly is incorporated into a cooking apparatus, such as an outdoor cooker or barbeque according to some exemplary embodiments.

Referring firstly to Figure 1, an exploded view of the key components of a cooking assembly 1 according to some embodiments is shown in isolation from the body of the cooking apparatus including the framework and body of a barbeque and/or heat sources which are all well understood from the prior art and are not shown for ease of illustration. In use, the cooking assembly 1 is removably fitted within or on the framework of the cooking apparatus.

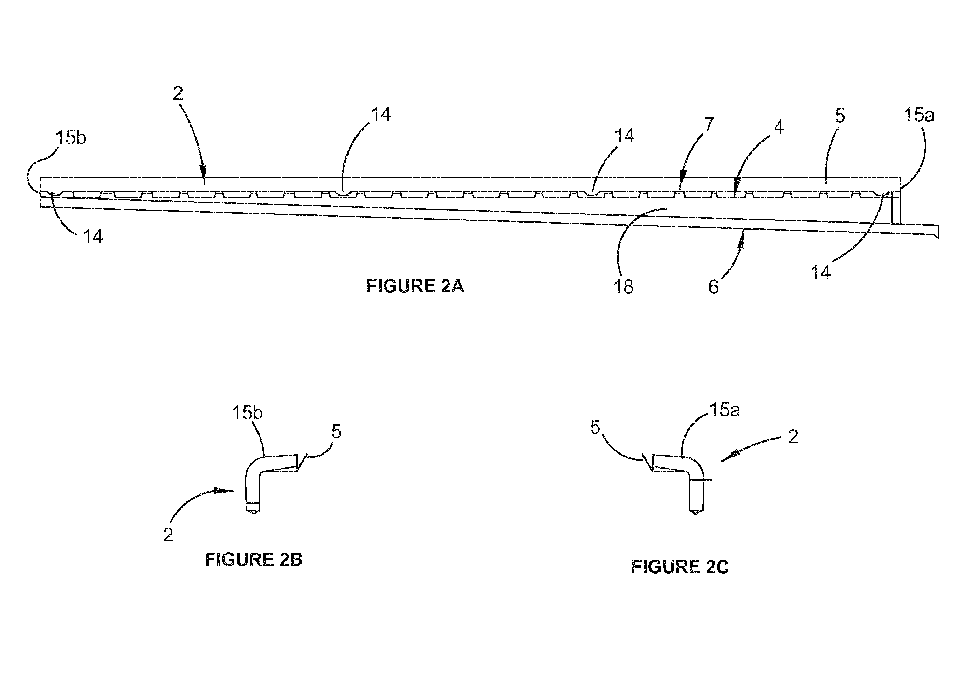

Referring to Figure 1 and the remaining Figures 2 to 10, the cooking assembly 1 comprises one or a plurality of grill or cooking plates, which in the illustrated example include a grill plate 11a and a hotplate 11b, which are positioned in the traditional manner over a heat source. The heat source typically includes one or more gas fired elements underneath the grill plates 11a, 11b. The grill plates 11a, 11b are preferably positioned in the forward-rear direction and mounted and placed on forward and rear mounting means integral with or otherwise affixed to a frame of the barbeque or cooking apparatus in question.

In this description, reference to front, rear, back, forward, rearward and other terms indicating a position or orientation may be interpreted with reference to a normal position of a user ready to operate (i.e. cook with) the cooking assembly or apparatus. Accordingly, a component located or positioned toward the "front" of the cooking assembly or apparatus can be interpreted to indicate a position closer to the normal position of the user, whereas a component located or position toward the "rear" of the cooking assembly or apparatus can be interpreted to indicate a position further from the normal position of the user. However, such terms are only intended to convey relative positions or orientations with respect to other components and not to limit the specific orientation in which the cooking apparatus can be used.

Described embodiments may advantageously provide for separation and removal of a certain quantity of unwanted oils, fats and other cooking liquids from the source of the food being cooked. For that purpose, the grill plate or plates 11a, 11b are inclined with the rear end of the plates being positioned at a higher or elevated position relative to the front ends so as to rely on the gravity feed and movement of any liquids from the rear toward the front of the grill plates. The higher elevation of the rear part of the plates 11a, 11b may be accomplished by having differently sized rear and front feet 9, 10 on the underside of the plates 11a, 11b. Alternatively, the front and rear mounts may be arranged at different levels to tilt the plates slightly toward the front.

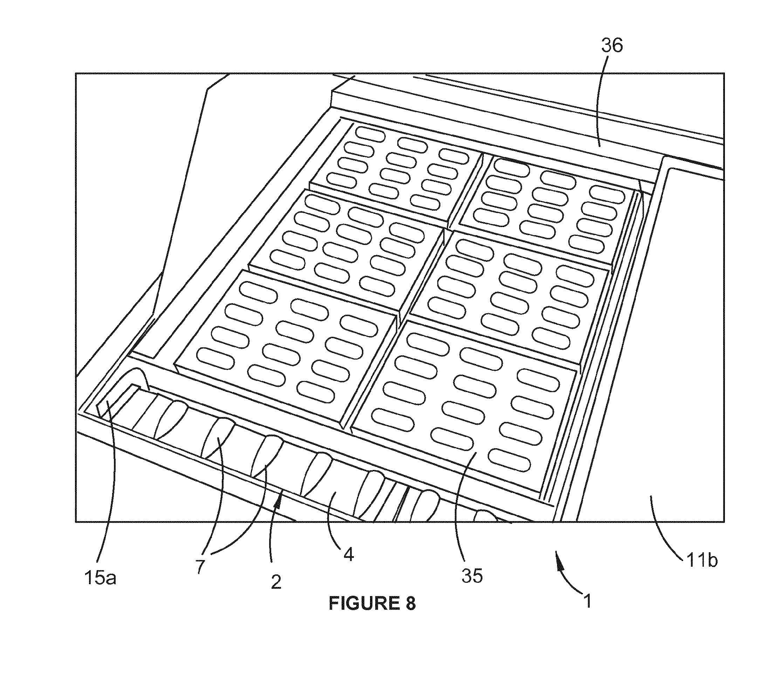

As can be seen in Figure 8, a rear mount 36 is used as part of the framework of the cooking apparatus that supports the rear edge of the grill plates 11a, 11b during normal use. Figure 8 shows a hot plate 11b on the right side and relying on rear mount 36 for support at its rear edge. The grill plate 11a is absent to illustrate the tiles 36 that may be present in between the heat source (not shown) and the grill plate 11a. Tiles 36 have apertures in them to allow passage of hot air therethrough from the heat source to the bottom of the grill plates, while also serving as a hot surface to partially shield the heat source from dripping liquids from the food that is cooking and generate some flavouring smoke from dripped liquids that burn on that hot surface.

Described embodiments include a collection tray 2 for said liquids, the collection tray 2 being positioned forward of the inclined grill plates 11a, 11b and associated with the forward mounting means (i.e. a horizontal cross-bar at the front) of the cooking apparatus in question. The liquid collection tray 2 is elongate and of sufficient length to encompass the associated grill plates in a manner whereby the forward edge 12a, 12b of each of the grill plates 11a, 11b rests on top of the collection tray 2 in a manner to receive any gravity fed liquids derived from cooked food.

The grill plate 11a may be provided with a plurality of channels 8, 31 for directing the flow of liquids which are caused to migrate from the rear to the front of the grill plate 11a, over the rounded (bull-nosed) front edge of the grill plate 11a and emerge onto the collection tray 2. The channels 8, 31 may be alternated with longitudinally aligned slot apertures 33 that allow a portion of the liquids from the cooked substances to drip through the grill plate 11a onto a hot tile (such as a ceramic tile 35, Fig 8) or plate. Such dripping liquids, when they hit the tile or plate, will usually generate an amount of smoke that wafts up to assist in flavouring the food.

In order to facilitate control of the collected liquids, the collection tray 2 is provided with a tray floor 4 of sufficient depth to comfortably accommodate the forward portions of the associated grill plates 11a, 11b, with tray floor 4 being inclined (downwardly relative to the horizontal) from the front to the rear, such that liquids so collected are directed away from the front of the collection tray 2 to the rear and into an inclined channel 6 associated with the collection tray 2.

Although two hot cooking plates 11a, 11b are shown and described herein, only a single plate may be used or more than two plates, such as three plates, may be used instead, depending on the size and configuration of the cooking apparatus. Each such cooking plate may be a grill plate 11a or a hot plate 11b. One of each such plates is shown and described for purposes of illustration and are for convenience collectively referred to as grill plates. For cooking assemblies having one or three grill plates, a collection tray that is (longitudinally) sized accordingly is used to underlie the rounded front edge or lip of one or all three of the grill plates.

In order to minimise any unintended loss of liquids, the collection tray 2 is preferably provided with a forward tray lip 5 such that any liquids flowing or cascading off the grill plates 11a, 11b will collect onto the inclined tray floor 4, either directly or by deflection of the tray lip 5.

The collection tray 2 may be formed entirely or almost entirely of a single piece of moulded or stamped sheet metal or a single piece of moulded plastic. The collection tray 2 is elongate and may have vertical end plates 15a, 15b at longitudinally opposite ends to stop fluids from running off the ends of the collection tray 2 before flowing into the collection channel 6. The length of the collection tray is configured to run along almost the entire length of the front of the cooking area of the cooking apparatus in order to catch fluid from all cooking plates in the cooking assembly 1.

The collection tray 2 has a vertically oriented wall 18 that joins the floor 4 with the collection channel 6. The height of the wall 18 is low at a higher end of the collection channel 6 and increases across the longitudinal length of the tray 2 so that the height of the wall 18 is greatest at a low end of the collection channel. Thus, the wall 18 may be viewed as being shaped like a long thin triangle, with a straight edge corresponding to the edge where the floor 4 transitions into the wall and an angled edge that runs along the sloped line of the collection channel 6.

In order to assist in the controlled movement of the cooking liquids from the grill plates 11a, 11b and across the inclined floor 4 and into the inclined channel 6, the inclined floor 4 is most preferably provided with a plurality of grill plate supports 7 in the form of transverse (extending in the direction from front to rear), supports which ensure the front lower edge 12a, 12b of the grill plates 11a, 11b are elevated somewhat above the inclined tray floor 4. This separation of the edges 12a, 12b from the tray floor 4helps to avoid any interruption with the movement of liquids from the grill plates 11a, 11b onto the inclined tray floor 4 and downward and back into the inclined channel 6. The transverse grill plate supports 7 are projected upward from the surface of the floor 4 to provide a generally horizontal contact surface (but possibly slightly angled to match the slight angle of the grill plates 11a, 11b) upon which the underside of part of the front of the grill plates 11a, 11b can rest.

The angle of inclination of the floor 4 and the collection channel 6 can be relatively shallow, so long as they promote adequate flow of liquids from the grill plates 11a, 11b into the collection reservoir 3. The angle of inclination of the grill plates 11a, 11b to the horizontal needs only to be slight in order to promote fluid flow into the collection tray 2. If the angle of inclination is too great, then the grill plates may end up being too far from the underlying heat source to provide adequately uniform heat distribution across the grill plates 11a, 11b.

The details of the collection tray are shown most clearly in Figures 2, 3 and 4. The rear view shown in Figure 2 clearly shows the provision of the tray floor 4 having a plurality of grill plate supports 7 running across the transverse length (rather than longitudinal length) thereof. The inclined channel 6 is formed toward the rear thereof at a definite angle of inclination across the longitudinal length of the collection tray, angling downwardly from a high end to a low end, so that even somewhat viscous fluids like fats and oils will readily flow toward the collection reservoir (i.e. in the form of a cup) positioned near the low end.

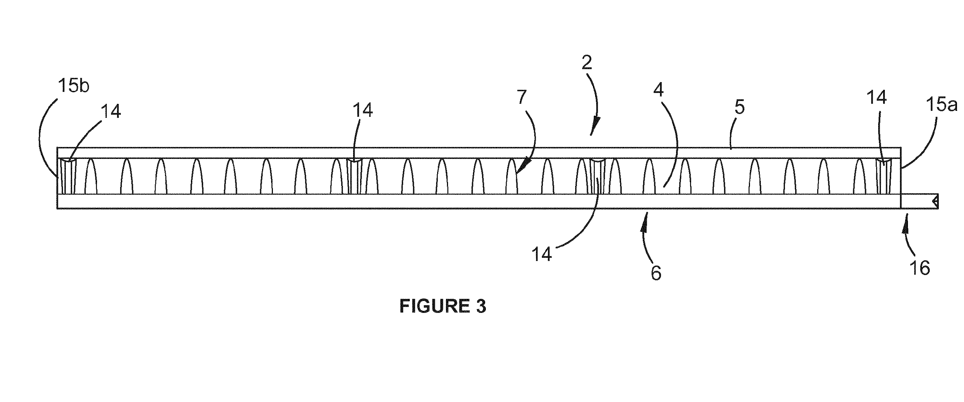

Referring to Figure 3, the frequency and preferred configuration of the grill plate supports 7 is clearly shown with the inclined channel 6 having a projecting portion 16, for example in the form of a collection spout, at one end. In embodiments depicted in the drawings, the outlet of the inclined collection channel 6 is positioned at a lower level than the level of the grill plates 11a, 11b and projects through one side of the frame of the cooking apparatus, effectively allowing the fluid to flow from the collection tray 2 inside the frame to an easily emptied reservoir 3 positioned on the outside of the frame. The projecting portion 16 allows the liquids to be directed into the liquid collection reservoir (also called a collection cup) 3, as shown in Figures 1, 6 and 7.

The projecting portion 16 may have a spout lip 16a formed as a downward notch or detent in the end-most part of the projecting portion 16 to assist in smooth pouring of the liquids from the channel 6 into the collection cup 3. The end of the projecting portion 16 is arranged to project far enough beyond a frame side wall 40 of the cooking apparatus to minimise dripping of liquids down the side wall 40. Side wall mounting apertures 41 may be formed in the side wall 40 to receive mounting hooks 21 positioned along one edge of the collection cup 3. The apertures 41 may be formed large enough to easily accommodate the mounting hooks 21 in a manner that readily allows manual placement and removal of the collection cup 3 in order to periodically empty the collected liquids. The collection cup 3 may have indented gripping portions 23 formed in side walls thereof to readily allow gripping of the collection cup 3 during placement on the frame side wall 40 and removal therefrom.

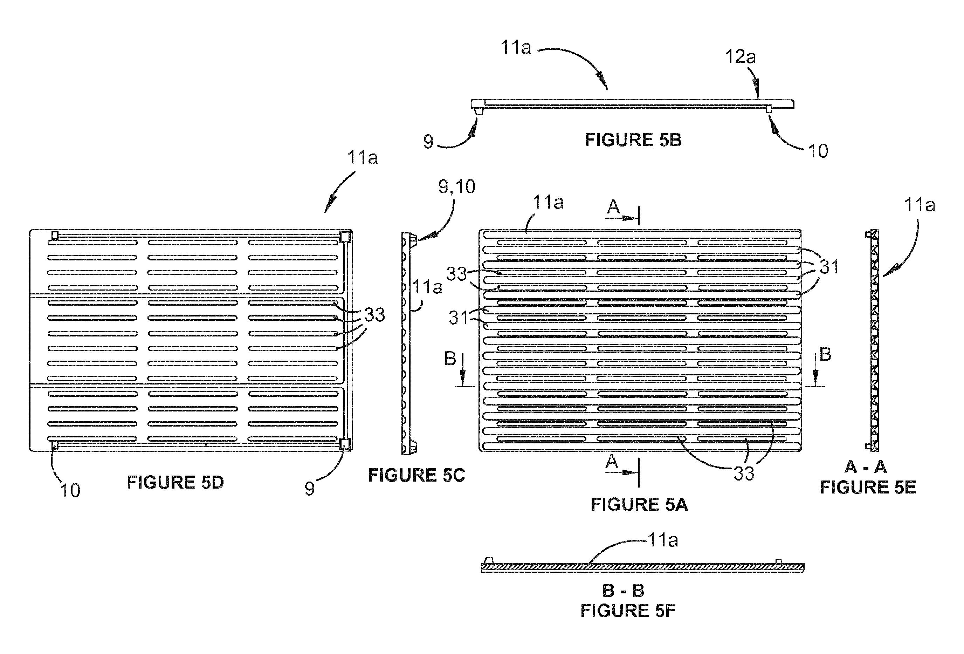

Referring now to Figures 5A to 5F, the specific configuration of one example of a grill plate 11a is shown with the grill plate 11a comprising an integral rear elevated foot 9 and front lower foot 10 so as to place the grill plate on an angle of inclination once positioned on mounting means, such as level front and rear horizontal cross bars, within the cooking apparatus.

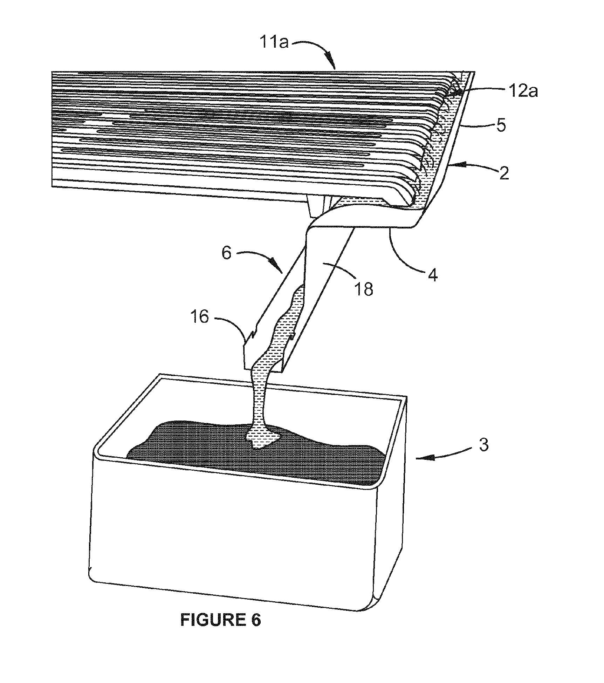

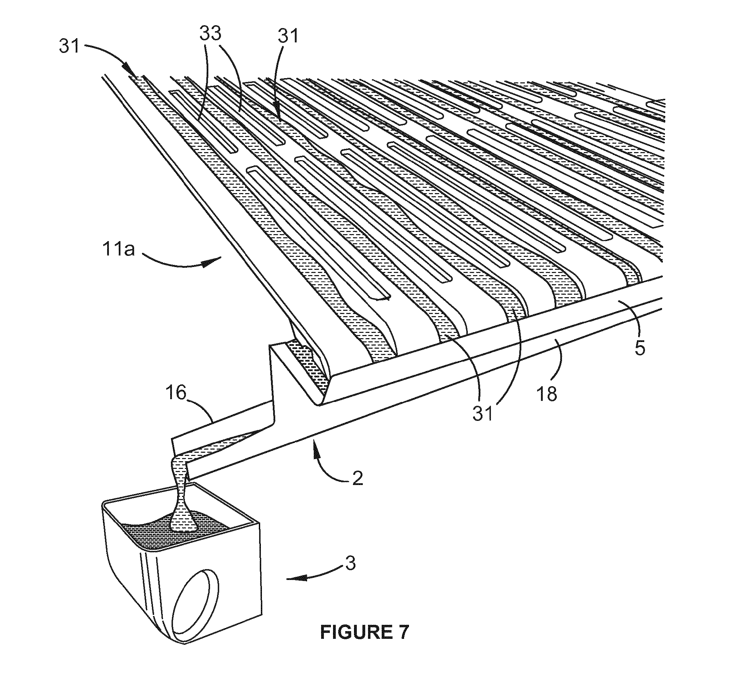

Referring now to Figures 6 and 7, the manner of operation of the cooking assembly is clearly shown with perspective views of the configuration and manner of co-operation of the grill plate 11a with the collecting channel 2 and the collecting reservoir 3.

Described embodiments provides a cooking assembly comprising a configuration of passive components ensuring the efficient clean and controlled removal of at least a portion of unwanted cooking liquids. The inclination of the grill plates 11a, 11b toward the collection tray 2 and the subsequent travel of the liquids across or along inclined parts of the collection tray 2 into the collection cup 3 allows easy disposal of the collected fluids. In aid of this, the front edges of the grill plates 11a, 11b are rounded to allow easy run-off of fluids into the collection tray 2.

In order to support the collection tray 2 so that the floor 4 is appropriately angled downwardly away from the front of the cooking apparatus, the floor 4 has support feet 14 formed therein or thereon to project downwardly in contrast to the raised grill plate supports 7 (that project upwardly from the surface that defines the floor 4). These support feet 14 are formed at intervals along the length of the floor 4 and serve to provide and define a flat horizontal edge or surface to lie on the flat horizontal surface of the front mount, which may be formed as a bar of the frame of the cooking apparatus. As with the grill plate supports 7, the support feet 14 may be formed by moulding or deformation of the metal (or possibly heat-resistant plastic or non-plastic) material from which the collection tray 2 is formed.

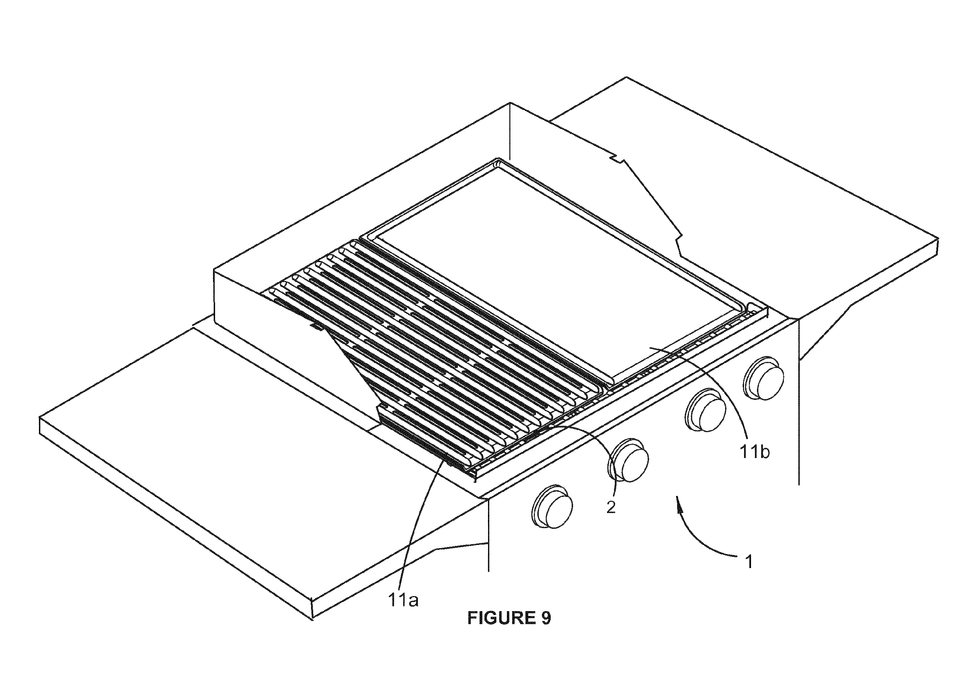

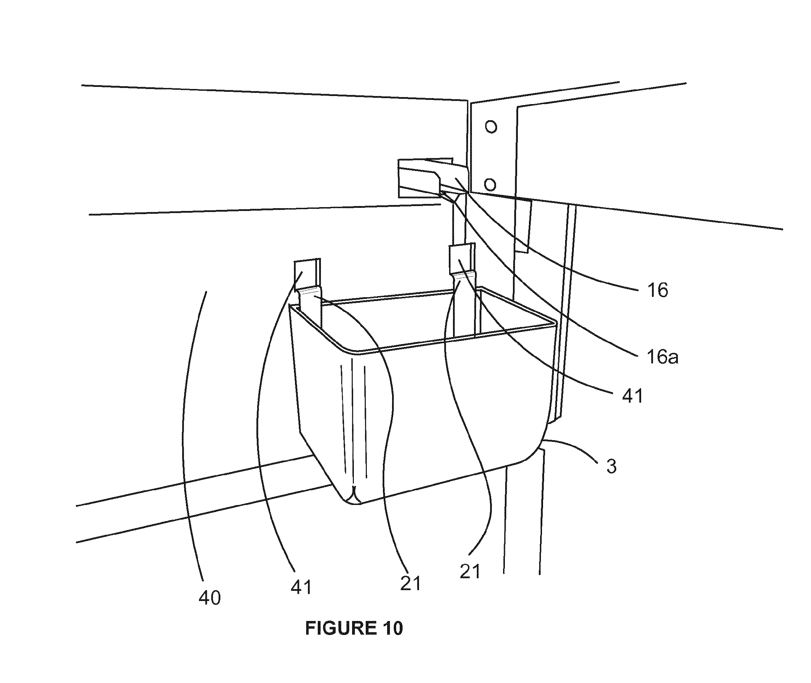

As shown in Figure 9, when the cooking assembly 1 is in use, the front parts of the grill plates 11a, 11b overlie and mostly obscure the collection tray 2. The fluid diversion structure provided by the collection tray 2 is therefore mostly hidden from a user during use of the cooking assembly 1. However, if periodic cleaning of the collection tray 2 is desired, the grill plates 11a, 11b can be removed (see Figure 8, in which the grill plate 11a has been removed), which will allow the collection tray 2, which normally rests unattached on the front mount (bar) of the cooking apparatus framework, to be manually removed from the cooking apparatus. The collection tray 2 can be removed by picking up the low end of the collection tray 2 and withdrawing the collection spout 16 from the aperture in side wall 40 that it normally rests in (see Figure 10). Alternatively, the collection tray 2 can be readily replaced within the cooking assembly 1 if the collection tray 2 becomes damaged or overly soiled from use.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

### Legend

1. Cooking assembly
2. Liquid collection tray
3. Liquid collection reservoir
4. Collection tray floor
5. Collection tray lip
6. Collection tray channel
7. Grill plate supports
9. Rear elevated foot
10. Front lower foot
11a. Grill plate
11b. Hot plate
12a. Rounded front edge of grill plate
12b. Rounded front edge of hot plate
14. Collection tray support foot
15a. Tray end plate at shallow end of tray
15b. Tray end plate at deep end of tray
16. Channel spout
16a. Spout lip
18. Wall joining floor 4 and channel 6
21. Mounting hook for collection reservoir
23. Gripping portions on collection reservoir
31. Shallow channels in grill plate 11a
33. Slot apertures in between channels 31 in grill plate 11a
35. Ceramic tiles
40. Frame side wall
41. Side wall mounting aperture

## Claims

1. A cooking assembly, comprising:
one or more grill plates positioned over a heat source;
mounting means for said one or more grill plates, including forward and rear mounts either side of said heat source, wherein said forward mount includes
a liquid collection tray positioned to collect liquids generated during the cooking process on said grill plates and to direct said liquids away from said grill plates and said heat source to a collection reservoir for disposal thereof.

2. The cooking assembly of claim 1, wherein the collection tray includes a floor, a forward lip and a rearward channel.

3. The cooking assembly of claim 2, wherein the floor is inclined toward said rearward channel.

4. The cooking assembly of claim 2 or claim 3, wherein the floor includes a plurality of raised grill plate supports.

5. The cooking assembly of any one of claims 2 to 4, wherein the rearward channel is inclined to direct liquids away from said grill plate and away from said heat source to a collection reservoir.

6. The cooking assembly of any one of claims 1 to 5, wherein the one or more grill plates include a plurality of channels running rear to forward.

7. The cooking assembly of claim 6, wherein the one or more grill plates include a rear elevated foot and a front lower foot so as to incline the angle of said channels when positioned on said forward and rear mounts.

8. The cooking assembly of any one of claim 1 to 7, wherein the assembly is an outdoor grilling cooker.

9. The cooking assembly of any one of claims 1 to 8, wherein the assembly takes the form of a barbeque.

10. A cooking apparatus comprising the cooking assembly of any one of claims 1 to 9.

11. The cooking apparatus of claim 10, further comprising a frame defining the forward and rear mounts and housing the heat source.

12. A fluid collection tray for a cooking assembly, the collection tray comprising:
an elongate body to be accommodated, in use, at least partially within a cooking apparatus, wherein the elongate body defines an inclined tray floor and an inclined collecting channel that extends along one edge of the elongate body;
wherein the inclination of the tray floor has a different direction than the inclination of the collecting channel;
wherein the inclined collecting channel is arranged to receive fluids flowing down the inclined tray floor and direct the fluids to a projecting portion of the collecting channel at one end of the elongate body; and
wherein the elongate body has a wall joining the tray floor and the collecting channel.

13. The fluid collection tray of claim 12, wherein the tray floor has raised portions formed therein to support one edge of grill plates of the cooking assembly.

14. The fluid collection tray of claim 12 or claim 13, wherein the tray floor has downwardly projecting feet formed therein or thereon to support the fluid collection tray relative to a forward mount of the cooking assembly.
